# EUROPEAN PATENT SPECIFICATION

(11) **EP 1 795 419 B1**
(45) Date of publication and mention of the grant of the patent: **08.09.2010**
(21) Application number: 06025462.0
(22) Date of filing: 08.12.2006
(51) Int. Cl.: B60T 11/20, B60T 8/26, B60T 8/32, B60T 7/10

(54) **Interlocking brake system for bar-handle vehicle**
Verriegeltes Bremssystem für Fahrzeug mit Lenkstange
Système de freinage verrouillé pour véhicule avec guidon

(30) Priority: 08.12.2005 JP 2005354956; 28.12.2005 JP 2005377676
(43) Date of publication of application: 13.06.2007
(73) Proprietor: NISSIN KOGYO CO., LTD., Ueda-shi, Nagano (JP)
(72) Inventor: Kusano, Toshihiro c/o NISSIN KOGYO CO., LTD., Nagano (JP); Hatakoshi, Genichi c/o NISSIN KOGYO CO., LTD., Nagano (JP); Tsuchida, Tetsuo c/o NISSIN KOGYO CO., LTD., Nagano (JP)
(74) Representative: HOFFMANN EITLE

(56) References cited:
- DE-A1- 3 012 146
- JP-A- 9 254 771
- US-A- 4 176 886

## Description

### BACKGROUND OF THE INVENTION

### Field of the invention

The present invention relates to an interlocking brake system for a bar-handle vehicle , and more particularly, to an interlocking brake system for a bar-handle vehicle integrally provided with an interlocking slave cylinder and a front-wheel hydraulic pressure master cylinder for a hydraulic pressure system of an interlocking brake.

### Description of the related art

In recent years, there has been suggested an interlocking brake system for a bar-handle vehicle having a first hydraulic pressure system for supplying a hydraulic pressure to a front-wheel brake from a front-wheel hydraulic pressure master cylinder in accordance with an operation of a front-wheel brake bar and a second hydraulic pressure system for supplying a hydraulic pressure to a rear-wheel brake and an interlocking slave cylinder from a rear-wheel actuator in accordance with an operation of a rear-wheel brake operation element and operating the front-wheel hydraulic pressure master cylinder by the use of the interlocking slave cylinder to supply the hydraulic pressure to the front-wheel brake. The front-wheel hydraulic pressure master cylinder and the interlocking slave cylinder are disposed in parallel and an intermediate portion of an arc-shaped interlocking member of which both ends abut on a piston end of the front-wheel hydraulic pressure master cylinder and a piston end of the interlocking slave cylinder, respectively, is rotatably connected to the front-wheel brake lever. When the front-wheel brake lever is operated to operate the front-wheel brake by the use of the first hydraulic pressure system, the interlocking member rotates with the operation of the front-wheel brake lever and thus presses the piston of the front-wheel hydraulic pressure master cylinder to operate the front-wheel hydraulic pressure master cylinder. When the rear-wheel brake operation element is operated to operate the front-wheel brake by the use of the second hydraulic pressure system, the interlocking member rotates with the hydraulic operation of the interlocking slave cylinder in a state where the front-wheel brake lever is kept in a non-operating state and presses the piston of the front-wheel hydraulic pressure master cylinder to operate the front-wheel hydraulic pressure master cylinder (for example, see Japanese Patent Unexamined Publication JP-A-9-254771

In the above-mentioned interlocking brake system, a breather is provided in a caliper body of a front disk brake and a slave cylinder disposed in the vicinity of a rear drum brake. When filling hydraulic fluid to the hydraulic pressure systems or when air is introduced into the hydraulic fluid, the air is discharged by loosening a breather screw screwed to the breather. However, in the above-mentioned interlocking brake system, since no breather is provided in a fluid passage from the rear-wheel hydraulic pressure master cylinder to the interlocking slave cylinder in the second hydraulic pressure system, it is difficult to rapidly and satisfactorily perform the discharge of air from the fluid passage from the rear-wheel hydraulic pressure master cylinder to the interlocking slave cylinder.

### SUMMARY OF THE INVENTION

An object of the invention is to provide an interlocking brake system for a bar-handle vehicle which can rapidly and satisfactorily discharge air from a fluid passage.

In order to achieve the above-mentioned object, according to a first aspect of the invention, there is provided an interlocking brake system for a bar-handle vehicle, comprising:
a first hydraulic pressure system for supplying hydraulic pressure from a front-wheel hydraulic pressure master cylinder to a front-wheel brake in accordance with an operation of a front-wheel brake lever; and
a second hydraulic pressure system for supplying a hydraulic pressure from a rear-wheel hydraulic pressure master cylinder to a rear-wheel brake and an interlocking slave cylinder in accordance with an operation of a rear-wheel brake operation element, and operating the front-wheel hydraulic pressure master cylinder by the interlocking slave cylinder to supply the hydraulic pressure to the front-wheel brake,
the interlocking brake system is characterized in that:
   the front-wheel hydraulic pressure master cylinder and the interlocking slave cylinder are disposed in parallel in a cylinder body attached to a handle bar on the upper portion of a vehicle, and
   a breather which communicates with the upper portion of the interlocking slave cylinder of the cylinder body and discharges air from a fluid channel at least from the rear-wheel hydraulic pressure master cylinder to the interlocking slave cylinder is provided in the second hydraulic pressure system.

According to a second aspect of the invention, as set forth in the first aspect of the invention, it is preferable that a reservoir tank communicating with the front-wheel hydraulic pressure master cylinder is formed integrally with the upper portion of the front-wheel hydraulic pressure master cylinder of the cylinder body,
the breather is provided adjacent to the reservoir tank, and
the breather and the upper portion of the reservoir tank communicate with each other through communication means.

By constructing the interlocking brake system as described above, in the first aspect of the invention, it is possible to rapidly and satisfactorily discharge air from the fluid passage from the rear-wheel hydraulic pressure master cylinder to the interlocking slave cylinder in the second hydraulic pressure system. Since the breather is provided in the vicinity of the front-wheel brake lever, it is possible to easily discharge the air.

In the second aspect of the invention, since the breather and the reservoir tank are connected to each other through the communication means such as a tube or a communication hole, it is possible to introduce the hydraulic fluid discharged from the breather at the time of discharging the air into the reservoir tank and thus to reduce the amount of disused hydraulic fluid at the time of discharging the air.

### BRIEF DESCRIPTION OF THE DRAWINGS

Fig. 1 is a front sectional view illustrating a part of an interlocking brake system according to a first embodiment of the invention;
Fig. 2 is a cross-sectional view taken along Line II-II of Fig. 1;
Fig. 3 is a side sectional view illustrating a part of the interlocking brake system;
Fig. 4 is a top sectional view illustrating a part of the interlocking brake system;
Fig. 5 is a top sectional view illustrating a part of the interlocking brake system at the time of operating a brake lever;
Fig. 6 is a top sectional view illustrating a part of the interlocking brake system at the time of operating a brake pedal;
Fig. 7 is an explanatory diagram illustrating the interlocking brake system;
Fig. 8 is a front sectional view illustrating a part of a cylinder body according to a second embodiment of the invention; and
Fig. 9 is a front sectional view illustrating a part of a cylinder body according to a third embodiment of the invention.

### Best Mode for Carrying out the Invention

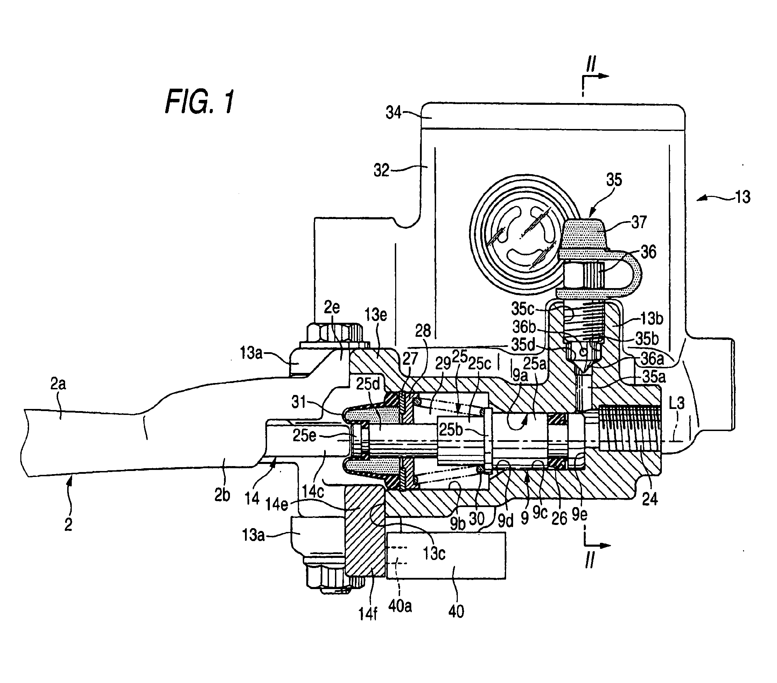

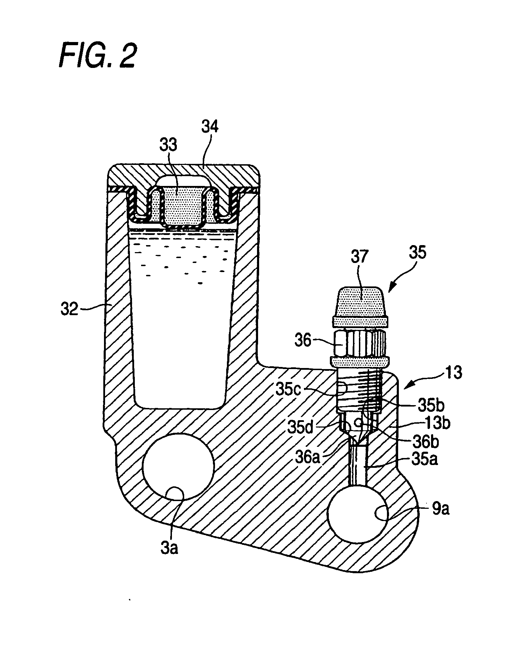

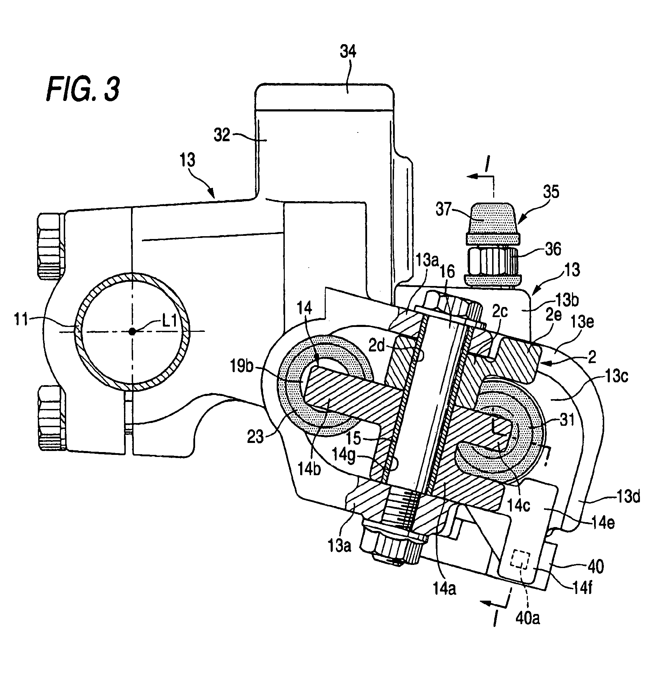

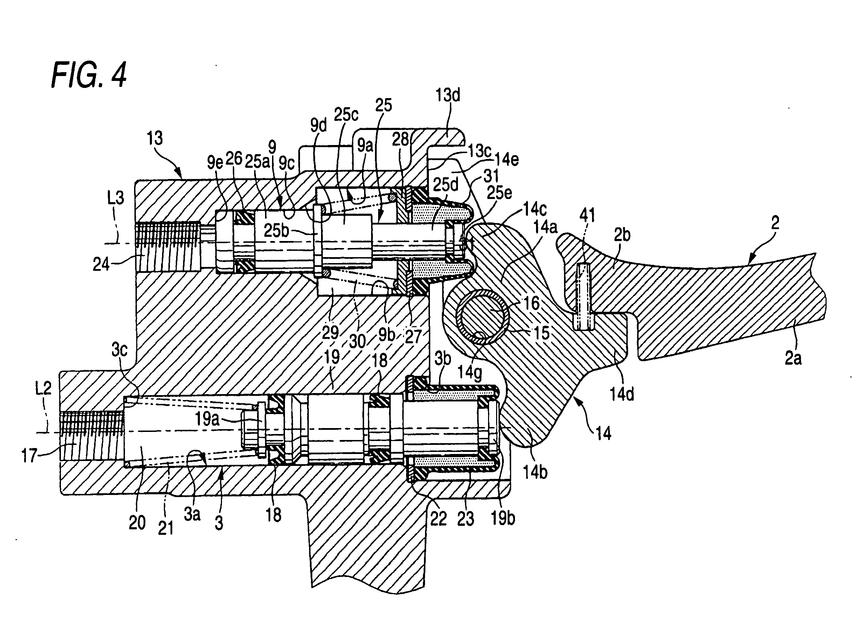

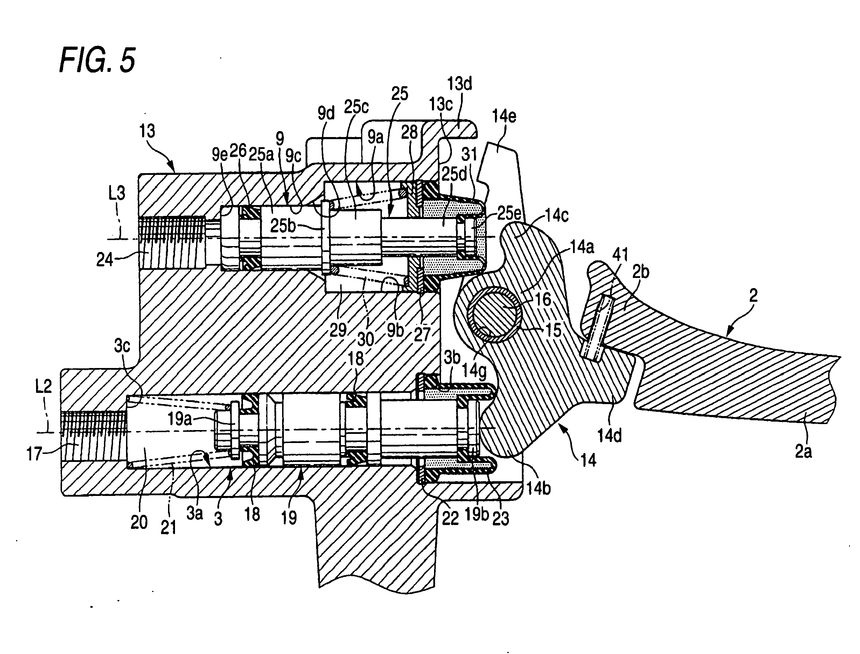

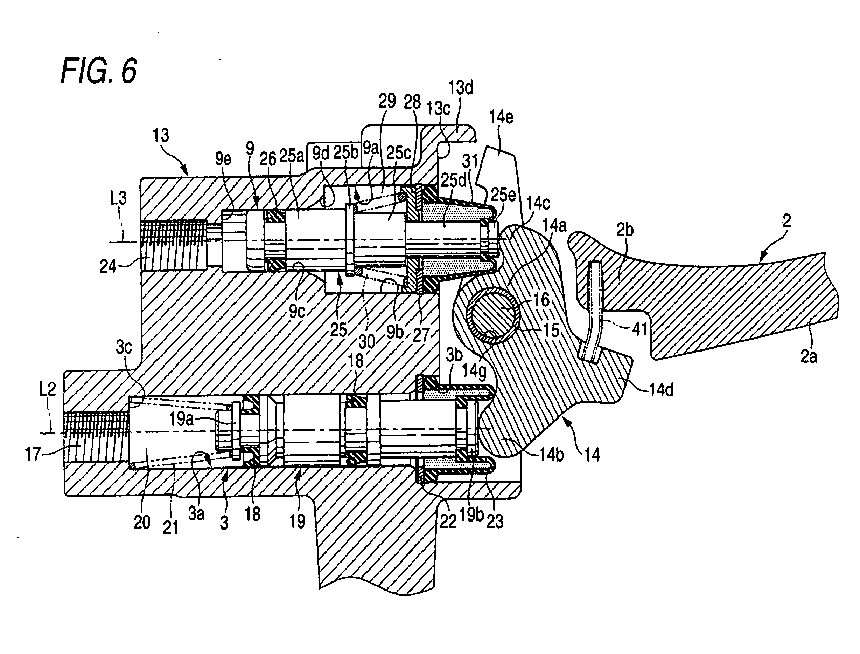

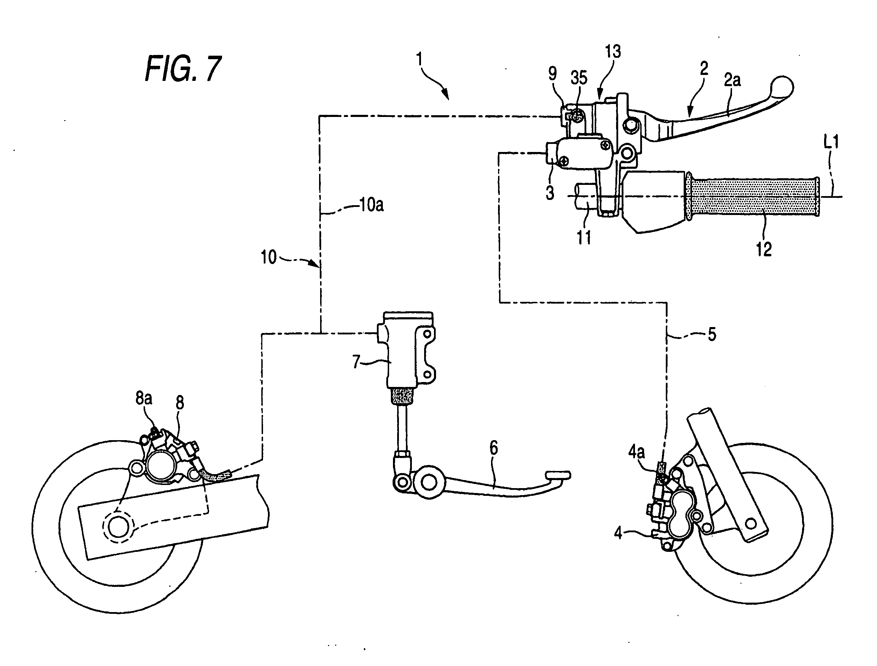

Hereinafter, embodiments of the invention will be described in detail with reference to the drawings. Figs. 1 to 7 show a first embodiment of the invention, where Fig. 1 is a front sectional view illustrating a part of an interlocking brake system, Fig. 2 is a cross-sectional view taken along Line II-II of Fig. 1, Fig. 3 is a side sectional view illustrating a part of the interlocking brake system, Fig. 4 is a top sectional view illustrating a part of the interlocking brake system, Fig. 5 is a top sectional view illustrating a part of the interlocking brake system at the time of operating a brake lever, Fig. 6 is a top sectional view illustrating a part of the interlocking brake system at the time of operating a brake pedal, and Fig. 7 is an explanatory diagram illustrating the interlocking brake system.

As shown in Fig. 7, the interlocking brake system for a bar-handle vehicle 1 according to this embodiment includes a first hydraulic pressure system 5 for supplying a hydraulic pressure from a front-wheel hydraulic pressure master cylinder 3 to a front-wheel brake 4 in accordance with the operation of a front-wheel brake lever 2 and a second hydraulic pressure system 10 for supplying a hydraulic pressure from a rear-wheel hydraulic pressure master cylinder 7 to a rear-wheel brake 8 in accordance with the operation of a brake pedal as an operation element of the rear-wheel brake and operating the front-wheel hydraulic pressure master cylinder 3 through an interlocking slave cylinder 9, which is hydraulically operated with the operation of the brake pedal 6, to supply the hydraulic pressure to the front-wheel brake 4.

The front-wheel hydraulic pressure master cylinder 3 and the interlocking slave cylinder 9 are disposed in parallel to the axial line L1 of the handle bar 11 in the cylinder body 13 fitted into the vehicle body adjacent to an accelerator grip 12 of a handle bar 11 for steering the front wheel on the front portion of the bar-handle vehicle body. On one side of the cylinder body 13, a pair of upper and lower lever brackets 13a and 13a is disposed to protrude from an intermediate position between cylinder bores of the front-wheel hydraulic pressure master cylinder 3 and the interlocking slave cylinder 9. A brake lever 2 and an interlocking member 14 are disposed in the lever brackets 13a and 13a so as to pivot along the axial line L2 and an axial line L3 by the use of a collar 15 and a pivot 16 disposed at an intermediate position between the axial line L2 of the front-wheel hydraulic pressure master cylinder3 and the axial line L3 of the interlocking slave cylinder 9. That is, the collar 15 and the pivot 16 are provided perpendicular to the plane passing through the axial line L2 and the axial line L3 and the front-wheel brake lever 2 and the interlocking member 14 are provided to rotate along the plane passing through the axial line L2 and the axial line L3.

The front-wheel hydraulic pressure master cylinder 3 is disposed at a position of the cylinder body 13 close to the handle bar 11. A bottomed first cylinder bore 3a used in the front-wheel hydraulic pressure master cylinder 3 is formed parallel to the axial line of the handle bar 11 and is opened toward the outside of the cylinder body 13. A large diameter portion 3b is formed on the opening side. A hydraulic fluid supply port 17 for supplying a hydraulic fluid to the front-wheel brake 4 is formed in the bottom portion 3c of the first cylinder bore 3a. A first piston 19 is inserted into the first cylinder bore 3a through two cup seals 18 and 18. A hydraulic chamber 20 is defined between the first piston 19 and the bottom portion 3c of the first cylinder bore 3a. The first piston 19 is biased toward the opening by a first return spring 21 disposed between a flange portion 19a formed on the base side of the first piston 19 and the bottom portion 3c and the retreat limit is restricted by a circlip 22 provided in a large diameter portion 3b of the first cylinder bore 3a. The edge portion 19b of the first piston 19 in a non-operating state protrudes from the first cylinder bore 3a and a first dust boot 23 is disposed between the edge portion 19b and the opening of the large diameter portion 3b.

The interlocking slave cylinder 9 is disposed at a position distant from the handle bar 11 of the cylinder body 13. A bottomed second cylinder bore 9a used in the interlocking slave cylinder 9 is opened to the one side surface 13b of the cylinder body 13. The bottomed second cylinder bore 9a includes a large diameter cylinder portion 9b close to the opening, a small diameter cylinder portion, 9c close to the bottom portion, and a conical portion 9d connecting the large diameter cylinder portion 9b and the small diameter cylinder portion 9c to each other. A hydraulic fluid introduction port 24 to which the hydraulic pressure is supplied with the operation of the brake pedal 6 is formed in the bottom portion 9e of the second cylinder bore 9a to communicate with the small diameter cylinder portion 9c. The second piston 9b includes a large diameter shaft portion 25a inserted into the small cylinder portion 9c, a flange portion 25b formed in the cylinder opening side end of the large diameter shaft portion 25a, a medium diameter shaft portion 25c extending from the flange portion 25b, and a small diameter edge portion 25d extending from the medium diameter shaft portion 25c. The second piston 25 is inserted into the second cylinder bore 9a through a cup seal 26 and a drop-out preventing member 28 is fitted to the opening of the large diameter cylinder portion 9b with a circlip 27. Accordingly, an air chamber 29 is defined among the drop-out preventing member 28, the large-diameter cylinder portion 9b, and the conical portion 9d. A second return spring 30 biasing the second piston 25 to the cylinder bore bottom is pivotally disposed between the drop-out preventing member 28 and the flange portion 25b. Since the medium diameter shaft portion 25c abuts on the drop-out preventing member 28, it is possible to accomplish the restriction of stroke of the second piston 25 and the drop-out prevention of the second piston 25. In a non-operation state, the edge portion 25e of the second piston 25 protrudes from the second cylinder bore 9a and a second dust boot 31 is disposed between the edge portion 25e and the opening of the large diameter cylinder portion 9b.

As shown in Figs. 1 to 3, in the cylinder body 13, a reservoir tank 32 communicating with the first cylinder bore 3a through a port (not shown) is formed in the upper portion of the front-wheel hydraulic pressure master cylinder 3, a breather boss portion 13c is formed integrally with the upper portion of the interlocking slave cylinder 9 so as to be adjacent to the reservoir tank 32, and a breather 33 is provided in the breather boss portion 13c. The breather 35 includes a small diameter breather hole 35a communicating with the hydraulic fluid introduction port 24 close to the second cylinder bore bottom, a medium diameter breather hole 35b extending from the small diameter breather hole 35a, a large diameter female screw hole 35c, a conical valve seat 35d formed between the medium diameter breather hole 35b and the small breather hole 35a, a breather screw 36 screwed to the large diameter female screw hole 35c, and a breather cap 37 fitted to the breather screw 36. The breather screw 36 blocks a communication with the outside by disposing a conical valve body 36a of the edge of the breather screw 36 in the valve seat 35d. The air introduced into the hydraulic chamber or the hydraulic fluid is discharged externally from a discharge hole 36b in the breather screw 36 by loosening the breather screw 36 to make the valve body 36a of the breather screw 36 separated from the valve seat 35d of the large diameter female screw hole 35c. A brake lamp switch 40 is provided in the lower portion of the cylinder body 13 and an operation element 40a of the brake lamp switch 40 is disposed to protrude from the one side surface 13c of the cylinder body 13.

The brake lever 2 is formed in a rod shape and smoothly curved along the front side of the accelerator grip 12 and includes an operation portion 2a operated by an operator, an interlocking member pressing arm 2b extending from the base portion of the operation portion 2a so as to press the interlocking member 14 to rotate, and a hinged portion 2c supported by the lever bracket 13a and 13a of the cylinder body 13, which are formed in a body. An insertion hole 2d for the pivot 16 and the collar 15 is formed in the hinged portion 2c and a rotation restricting piece 2e abutting on one side of the cylinder body 13 and restricting the rotation of the interlocking slave cylinder of the brake lever 2 extends therefrom.

The interlocking member 14 includes a middle hinged portion 14a supported by the lever brackets 13a and 13a of the cylinder body 13, an arc-shaped first operation arm 14b and an arc-shaped second operation arm 14c extending from the hinged portion 14a and abutting on the edge portions of the first piston 19 and the second piston 25, respectively, an abutting arm 14d opposite to the interlocking member pressing arm 2b formed in the brake lever 2, a rotation restricting piece 14e abutting on the one side surface 13b of the cylinder body 13 to restrict the rotation of the interlocking member 14, and a switch operation portion 14f extending from the rotation restricting piece 14e to press the operation element 40a of the brake lamp switch 40, which are all formed in a body. An insertion hole 14g for the pivot 16 and the collar 15 is formed in the hinged portion 14a. A spring member 35 biasing the brake lever 2 to a non-operating position is pivotally formed between the abutting arm 14d and the interlocking member pressing arm 2b. A first cover wall portion 13d covering the abutting portion between the rotation restricting piece 14a of the interlocking member 14 and the one side surface 13b is formed on the side of the cylinder body 13 opposite to the bar handle. A second cover wall portion 13e covering the abutting portion is formed in the upper side of the cylinder body 13.

In the above-mentioned interlocking brake system 1, as shown in Fig. 4 in the state where the brake lever 2 and the brake pedal 6 are not operated, the rotation of the brake lever 2 is restricted by allowing the rotation restricting piece 2e to abut on the one side of the cylinder body 13 in accordance with the elastic force of the first return spring 21 of the front-wheel hydraulic "pressure" master cylinder 3, the second return spring 30 of the interlocking slave cylinder 9, and the spring member 35. The rotation of the interlocking member 14 is restricted by allowing the rotation restricting piece 14e to abut on the one side surface 13b. The switch operation portion 14f provided in the interlocking member 14 presses the operation element 40a and thus the brake lamp switch 40 is in the OFF state.

When the brake lever 2 is rotated, as shown in Fig. 5, the interlocking member pressing arm 2b of the brake lever 2 presses the abutting arm 14d of the interlocking member 14, the brake lever 2 and the interlocking member 14 rotate toward the front-wheel hydraulic pressure master cylinder 3 about the pivot 16, and the first operation arm 14b of the interlocking member 14 presses the first piston 19 to the cylinder bore bottom against the elastic force of the first return spring 21. Accordingly, hydraulic pressure is generated in the hydraulic chamber 20 and the hydraulic pressure is supplied to the front-wheel brake 4 through the first hydraulic pressure system 5 from the hydraulic fluid supply port 17, thereby operating the front-wheel brake 4. With the rotation of the brake lever 2, the rotation restricting piece 2e of the brake lever 2 becomes distant from the one side of the cylinder body 13, the rotation restricting piece 14e of the interlocking member 14 becomes distant from the one side surface 13b, and the switch operation portion 14f becomes distant from the operation element 40a. Accordingly, the operation element 40a of the brake lamp switch 40 protrudes and the brake lamp switch 40 is changed to the ON state, thereby lighting a brake lamp not shown.

When the brake pedal 6 is operated, as shown in Fig. 6, a hydraulic pressure is generated in a hydraulic chamber (not shown) of the rear-wheel hydraulic pressure master cylinder 7 and the hydraulic pressure is supplied to the rear-wheel brake 8 through the second hydraulic pressure system 10, thereby operating the rear-wheel brake 8. On the other hand, the hydraulic pressure generated in the hydraulic chamber of the rear-wheel hydraulic pressure master cylinder 7 is supplied to the second cylinder bore 9a through the second hydraulic pressure system 10 from the hydraulic fluid introduction port 24 of the interlocking slave cylinder 9, thereby pressing the second piston 25 to the cylinder bore opening against the elastic force of the second return spring 30. Accordingly, the edge portion 25e of the second piston 25 protrudes from the cylinder bore opening and presses the second operation arm 14c of the interlocking member 14, thereby rotating the interlocking member 14 about the pivot 16. The interlocking member 14 rotates independently with the brake lever 2 kept in the non-operating state in accordance with the expansion of the spring member 41 and the first operation arm 14b operates the front-wheel hydraulic pressure master cylinder 3, thereby operating the front-wheel brake 4 as described above. At this time, as the rotation restricting piece 14e of the interlocking member 14 becomes apart from the one side surface 13c, the brake lamp switch 40 is changed to the ON state as described above, thereby lighting the brake lamp.

In the above-mentioned interlocking brake system 1, when filling the hydraulic fluid to the hydraulic pressure systems 5 and 10 or the introduced air is discharged, as widely known, the air can be discharged by the use of the breather 4a provided in the front-wheel brake 4 or the breather 8a provided in the rear-wheel brake 8. The air in the fluid passage 10a (at least from the rear-wheel hydraulic pressure master cylinder 7 to the interlocking slave cylinder 9) in the second hydraulic pressure system can be discharged by the use of the breather 35 provided in the cylinder body 13. Accordingly, it is possible to rapidly and satisfactorily discharge the air from the hydraulic pressure systems 5 and 10. Since the breather 35 is provided in the vicinity of the brake lever 2, the air in the hydraulic pressure system 5 is first discharged and then the air in the hydraulic pressure system 10 can be discharged without changing the work position of a worker, thereby easily discharging the air from the hydraulic pressure system 5 and the hydraulic pressure system 10.

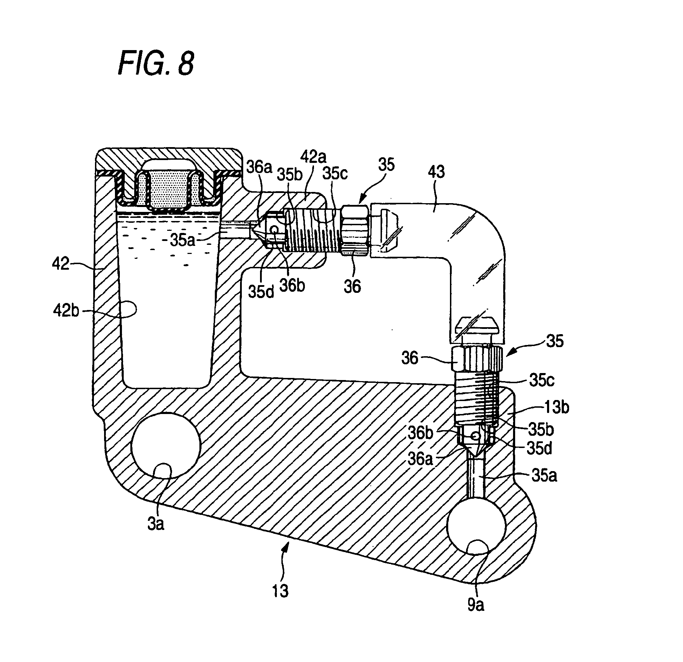

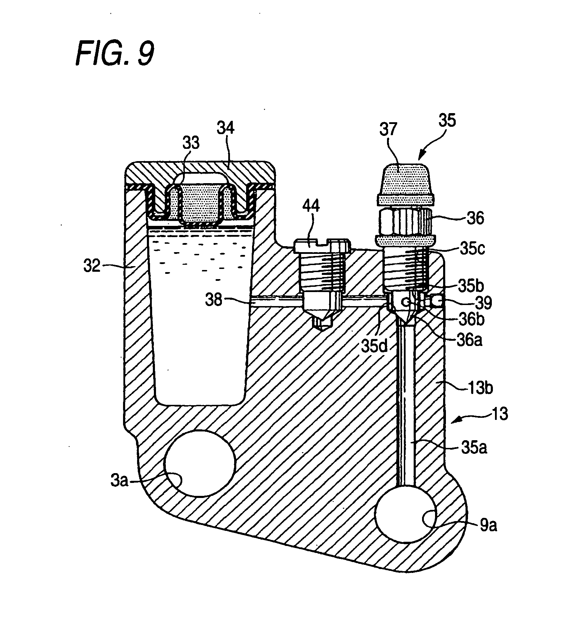

Figs. 8 and 9 are sectional views illustrating a part of a cylinder body according to second and third embodiments of the invention, respectively. The same elements as the first embodiment are denoted by the same reference numerals and detailed description thereof will be omitted.

In the second embodiment shown in Fig. 8, a breather boss portion 42a is formed to protrude from the side surface of the reservoir tank 42, a reservoir tank side breather 35 having the same configuration as the breather 35 of the first embodiment is provided in the breather boss portion 42a, a small diameter breather hole 35a and a fluid storage chamber 42b of the reservoir tank 42 communicate with each other. The edge portions of the reservoir tank side breather 35 and the slave cylinder side breather 35 are connected to each other through a connection hose 43. Accordingly, at the time of discharging the air, the air is discharged into in the fluid storage chamber 42b of the reservoir tank 42 through the connection hose 43 by loosening the breather screws 36 and 36 of both breathers 35 and 35. The hydraulic fluid discharged from the slave cylinder side breather 35 is recovered into the fluid storage chamber 42b through the connection hose 43 and the reservoir tank side breather 35.

In the third embodiment shown in Fig. 9, a blocking valve 44 is provided in the way of the communication hole 38 and the air is discharged with the blocking valve 44 closed.

The invention is not limited to the above-mentioned embodiments, but the operation element of the rear-wheel brake may be a brake lever. The invention may be applied to a longitudinal brake system in which the cylinder body is disposed so that the axial line of the cylinder bore is perpendicular to the axial line of the handle bar.

## Claims

1. An interlocking brake system for a bar-handle vehicle, comprising:
a first hydraulic pressure system for supplying hydraulic pressure from a front-wheel hydraulic pressure master cylinder (3) to a front-wheel brake (4) in accordance with an operation of a front-wheel brake lever (2); and
a second hydraulic pressure system for supplying a hydraulic pressure from a rear-wheel hydraulic pressure master cylinder (7) to a rear-wheel brake (8) and an interlocking slave cylinder (9) in accordance with an operation of a rear-wheel brake operation element (6), and operating the front-wheel hydraulic pressure master cylinder (3) by the interlocking slave cylinder (9) to supply the hydraulic pressure to the front-wheel brake (4),
the interlocking brake system is **characterized in that:**
the front-wheel hydraulic pressure master cylinder (3) and the interlocking slave cylinder (9) are disposed in parallel in a cylinder body (13) attached to a handle bar (11) on the upper portion of a vehicle, and
a breather (35) which communicates with the upper portion of the interlocking slave cylinder (9) of the cylinder body (13) and discharges air from a fluid channel (4a) at least from the rear-wheel hydraulic pressure master cylinder (7) to the interlocking slave cylinder (9) is provided in the second hydraulic pressure system.

2. The interlocking brake system for the bar-handle vehicle according to Claim 1, is **characterized in that:**
a reservoir tank communicating with the front-wheel hydraulic pressure master cylinder is formed integrally with the upper portion of the front-wheel hydraulic pressure master cylinder of the cylinder body,
the breather is provided adjacent to the reservoir tank, and
the breather and the upper portion of the reservoir tank communicate with each other through communication means.

## Patentansprüche

1. Verriegelungsbremssystem für ein Lenkerfahrzeug, umfassend:
ein erstes Hydraulikdrucksystem zum Bereitstellen von Hydraulikdruck von einem Vorderradhydraulikdruckhauptzylinder (3) an eine Vorderradbremse (4) gemäß einer Betätigung eines Vorderradbremshebels (2); und
ein zweites Hydraulikdrucksystem zum Bereitstellen von Hydraulikdruck von einem Hinterradhydraulikdruckhauptzylinder (7) an eine Hinterradbremse (8) und an einen Verrieglungsnebenzylinder (4) gemäß einer Betätigung eines Hinterradebremsenbetätigungselementes (6) und Betätigen des Vorderradhydraulikdruckhauptzylinder (3) durch den Verriegelungsnebenzylinder (9), um der Vorderradbremse Hydraulikdruck zur Verfügung zu stellen,
wobei das Verriegelungsbremssystem **dadurch gekennzeichnet ist, dass**
der Vorderradhydraulikdruckhauptzylinder (3) und der Verriegelungsnebenzylinder (9) parallel in einem Zylinderkörper (13), der an dem Lenkergriff (11) auf dem oberen Abschnitt eines Fahrzeuges angebracht ist, angeordnet sind, und
einen Entlüfter (35), der mit dem oberen Abschnitt des Verriegelungszylinders (9) des Zylinderkörpers (13) in Verbindung steht und Luft aus einem Fluidkanal (9a) von zumindest dem Hinterradhydraulikdruckhauptzylinder (7) an den Verriegelungsnebenzylinder (4) entlädt, vorgesehen ist.

2. Verriegelungsbremssystem für ein Lenkerfahrzeug nach Anspruch 1, **dadurch gekennzeichnet, dass**
ein Vorratsbehälter, der mit dem Vorderradhydraulikdruckhauptzylinder in Verbindung steht, integral mit dem oberen Abschnitt des Vorderradhydraulikdruckhauptzylinders des Zylinderkörpers geformt ist,
der Entlüfter neben dem Vorratsbehälter vorgesehen ist, und
der Entlüfter und der obere Abschnitt des Vorratsbehälters miteinander über Verbindungsmittel in Verbindung stehen.

## Revendications

1. Système de frein à verrouillage pour un véhicule à guidon, comprenant :
un premier système de pression hydraulique pour fournir une pression hydraulique en provenance d'un maître-cylindre de pression hydraulique de roue avant (3) à un frein de roue avant (4) selon une mise en oeuvre d'un levier de frein de roue avant (2) ; et
un second système de pression hydraulique pour fournir une pression hydraulique en provenance d'un maître-cylindre de pression hydraulique de roue arrière (7) à un frein de roue arrière (8) et un cylindre asservi de verrouillage (9) selon une mise en oeuvre d'un élément de mise en oeuvre de frein de roue arrière (6), et mettant en oeuvre le maître-cylindre de pression hydraulique de roue avant (3) par le cylindre asservi de verrouillage (9) pour fournir la pression hydraulique au frein de roue avant (4),
le système de frein à verrouillage est **caractérisé en ce que :**
le maître-cylindre de pression hydraulique de roue avant (3) et le cylindre asservi de verrouillage (9) sont disposés en parallèle dans un corps de cylindre (13) attaché à un guidon (12) sur la partie supérieure d'un véhicule, et
un clapet d'air (35), qui communique avec la partie supérieure du cylindre asservi de verrouillage (9) du corps de cylindre (13) et décharge de l'air provenant d'un canal de fluide (4a) au moins à partir du maître-cylindre de pression hydraulique de roue arrière (7) vers le cylindre asservi de verrouillage (9), est disposé dans le second système de pression hydraulique.

2. Système de frein à verrouillage pour le véhicule à guidon selon la revendication 1, **caractérisé en ce que :**
un récipient formant réservoir communiquant avec le maître-cylindre de pression hydraulique de roue avant est formé d'un seul tenant avec la partie supérieure du maître-cylindre de pression hydraulique de roue avant du corps de cylindre,
le clapet d'air est disposé à côté du récipient formant réservoir, et
le clapet d'air et la partie supérieure du récipient formant réservoir communiquent l'un avec l'autre par l'intermédiaire d'un moyen de communication.
